# EUROPEAN PATENT SPECIFICATION

(11) **EP 0 896 083 B1**
(45) Date of publication and mention of the grant of the patent: **17.10.2001**
(21) Application number: 98111482.0
(22) Date of filing: 23.06.1998
(51) Int. Cl.: D06F 37/20, F16F 9/54, F16F 3/04

(54) **Improved elastic suspension means for the washing assembly of a washing machine**
Elastische Aufhängevorrichtung für Waschmaschine
Suspension élastique pour machine à laver

(30) Priority: 04.08.1997 IT PN970035 U
(43) Date of publication of application: 10.02.1999
(73) Proprietor: Electrolux Zanussi S.p.A., 33170 Pordenone (IT); RO-SA S.a.s., 33080 Porcia, Pordenone (IT)
(72) Inventor: Cassan, Remo, 33090 Cavasso Nuovo, Pordenone (IT); Sandrin, Giannino, 33080 Porcia, Pordenone (IT)
(74) Representative: Agostini, Agostino

(56) References cited:
- EP-A- 0 265 004
- EP-A- 0 806 514
- US-A- 3 332 523
- US-A- 5 549 182
- PATENT ABSTRACTS OF JAPAN vol. 014, no. 582 (C-0792), 26 December 1990 -& JP 02 255191 A (SANYO ELECTRIC CO LTD), 15 October 1990

## Description

The present invention generally refers to washing machines, including the so-called washer-dryers, in particular residential-type clothes washing and combined clothes washing and drying machines, and namely the supension means for the washing assembly thereof.

Washing machines of the above cited kind are generally known to comprise a washing assembly, which substantially consists of a stationary tub, a rotating drum inside said tub, and a drive motor for rotatably driving said drum. Elastic means, which are usually integrated by friction-type shock absorbers, are used to let said washing assembly be supported by the stationary structure of the washing machine.

Among the number of patents that deal with matters concerning the suspension of the washing assembly of such machines, particular attention should be devoted to FR-A-2 531 461, which provides for the use of elastic means having a rigidity of an absolute value that increases with the intensity of the stress imposed by the washing assembly during the operation of the washing machine.

The above cited document, however, does not disclose any detail about the actual construction of said elastic means, except for a general indication of their consisting of compression-type springs formed by at least two sets of turns having a different pitch when at rest. In other words, those skilled in the art would certainly not be able to derive any valuable teaching from the above cited document as to how the therein disclosed solution might actually be concretely implemented.

Document US-A-3332523 falling under the terms of Article 54(3) EPC discloses a suspension means for a washing machine having a first and a second rigid member provided with attachments hooks for being attached to either the stationary structure or the washing assembly of a rotating-drum washing machine. A compression spring is enclosed between the first and second rigid member to vary the rigidity of the suspension of the washing assembly. The first rigid member consists of a casing with a first and a second part removably connected to the first part and is provided with an opening through which the second rigid member is capable of sliding.

Further interesting documents that can be cited in connection with the issue being discussed here are EP-A-0 080 243 and EP-A-0 265 004, filed by the same Applicant. These two documents disclose two respective variants of elastic means for the suspension of the washing assembly, which advantageously double to also perform as friction-type shock absorbers. Both these variants are based on the use of a helical pulling-type or tractive spring arranged inside a rigid tube having an end portion adapted to be attached, for instance, to the outer casing of a washing machine, and capable of sliding under friction within a rigid cylindrical, longitudinally grooved casing that encloses it elastically. The free end portion of said cylindrical casing is in turn adapted to be attached, for instance, to the washing assembly of the machine.

In this connection, it should first of all be noticed that the use of such a tractive or pulling-type spring, ie. a spring that is subjected to particularly severe stresses, does not represent the best possible solution in view of assuring a failure-free, smooth operation of the washing machine for a prolonged period of time. Furthermore, a more careful analysis of both the description given in said two documents and the accompanying drawings actually reveals that the assembly of the above mentioned parts making up such means would in fact prove to be scarcely feasible on an industrial scale. It therefore ensues that even these two documents would fail to prove of any practical help to a washing machine design engineer who must for instance define washing-assembly suspension means that are effective also at the highest rotation speed of the drum (which is in excess of 1500 rpm in some of the most recent models), while keeping the related costs as low as possible.

It therefore would be desirable, and it actually is a main purpose of the present invention, to provide a solution enabling the washing assembly to be suspended elastically to the stationary structure of the washing machine in such a manner as to obtain the operating and practical advantages of both afore mentioned solutions, while of course making use of means that are both industrially and economically feasible.

Further purposes of the present invention are to provide suspension means that are more reliable of the prior-art ones and are capable of being manufactured in an economical and rational manner in all variants as may be required by a range of washing machine models that typically includes a large variety of sizes, load capacities, constructions of the washing assembly and rotating speeds of the drum.

According to the present invention, such aims are reached in the features and characteristics as recited in the appended claims.

The features and advantages of the present invention will anyway be more readily understood from the description which is given below by way of non-limiting example with reference to the accompanying drawings, in which:
- Figure 1 is a view, along a longitudinal-section plane, of a first embodiment of a washing-assembly suspension means before being installed in a washing machine;
- Figure 2 is a view of the suspension means illustrated in Figure 1 in the state in which it is installed in a washing machine that is filled with both the washload and the water at the beginning of a wash cycle;
- Figure 3 is a view of the same suspension means illustrated in Figures 1 and 2 when the washing machine is going through the final spin-extraction phase of the wash cycle; and
- Figure 4 is a view, along the same longitudinal-section plane of Figure 1, of a second embodiment of the same suspension means as installed in a washing machine that is going through a wash cycle.

As shown in the above cited Figures, a suspension means according to the present invention for suspending the washing assembly to the outer casing of a washing machine, substantially consists of a first and a second rigid member, which are generally indicated at 10 and 20, respectively, as well as two helical springs 30 and 40 having a different elastic constant and arranged in series with respect to each other, wherein all these parts of the suspension means are aligned along the same axis X - X.

The first rigid member 10 is a casing, which essentially consists of a first and a second cylindrically shaped part 11 and 12 of plastic material, produced by injection moulding, which are snap-fitted together thanks to respective circumferential male and female protrusions 13 and 14, respectively, which allow for the same parts to be separated from each other through the use of an appropriate tool.

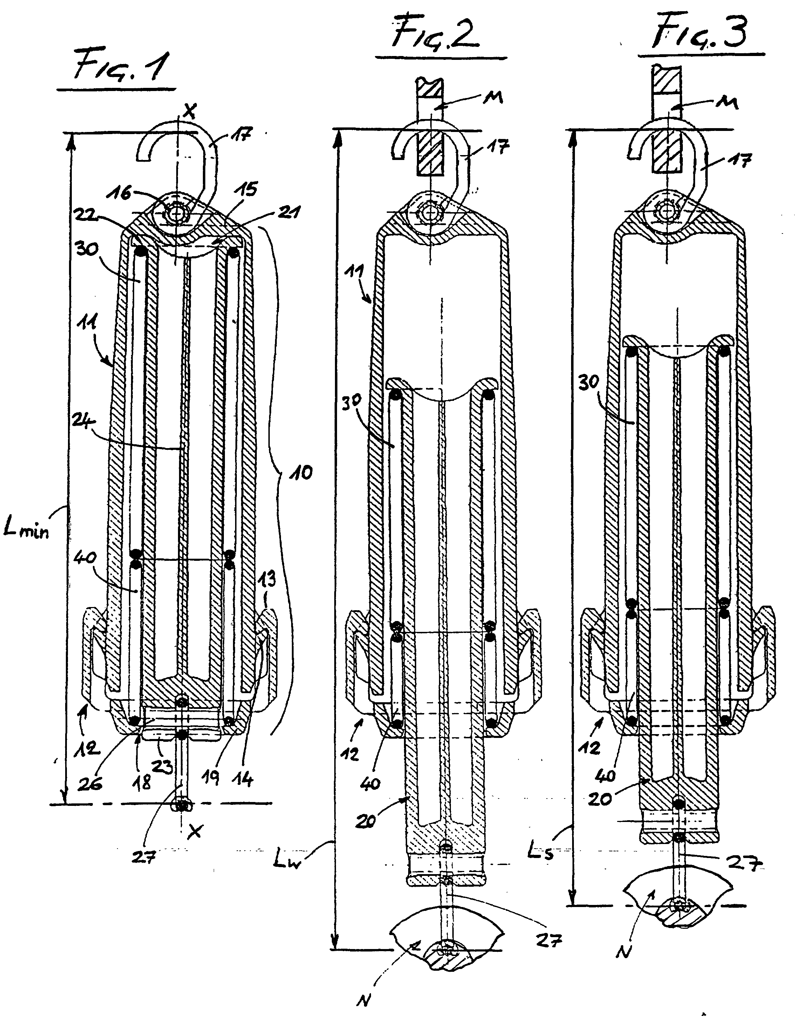

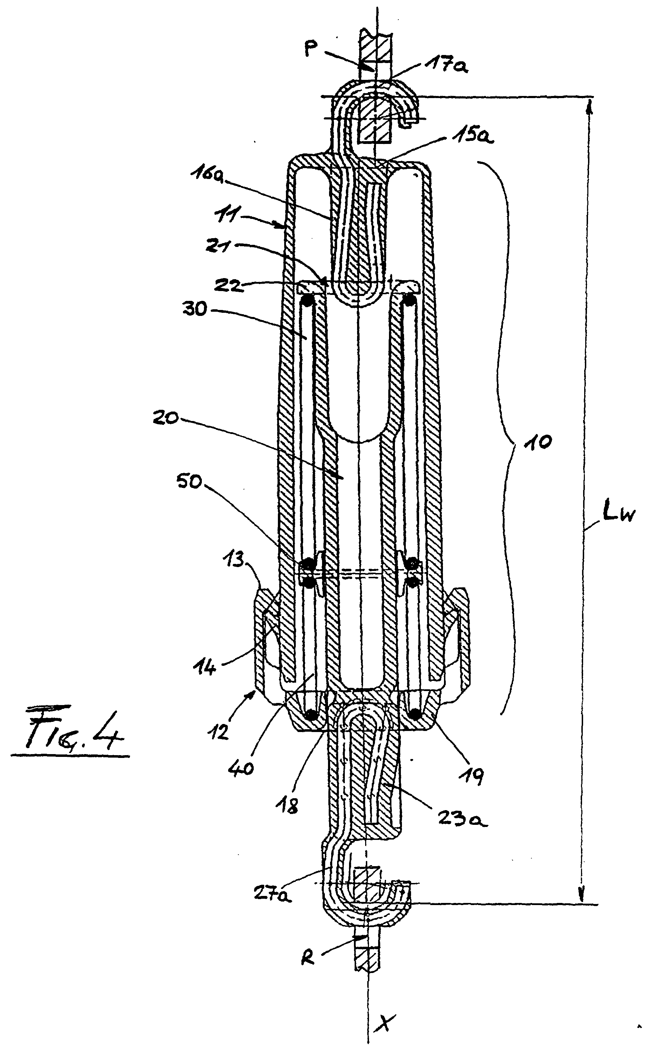

In a first embodiment of the present invention (Figures 1 to 3), the first end portion 15 (ie. the upper one) of said first part 11 of the first rigid member 10 forms a seat in which the metal hinging pin 16 is retained for a first protruding steel hook 17 used for anchoring the suspension means on to the outer casing of the washing machine (as shown schematically with an eyelet M in Figures 2 and 3, for reasons of greater simplicity).

In a second embodiment of the present invention (Figure 4), the first end portion 15a of said first part 11 of the first rigid member 10 comprises a downward oriented appendix 16a on which a first steel hook 17a is provided by overmoulding, whose protruding portion is used for anchoring the suspension means on to the outer casing of the washing machine (as shown schematically with an eyelet P in Figure 4 for reasons of greater simplicity).

The second end portion (ie. the lower one) of the same first part 11 of the first rigid member 10 is, in both above cited embodiments, open so as to enable the second rigid element 20 to pass therethrough.

The first end portion (ie. the upper one) of said second part 12 of the first rigid member 10 is provided with the afore mentioned male-type protrusions 13 for joining with said first part 11.

The second end portion (ie. the lower one) of the same second part 12 of the first rigid member 10 has a central opening 18 that is delimited by an annular edge 19 against which an end portion of the second spring 40 is caused to abut, as this will be described in greater detail further on.

The second rigid member 20, which is also made of injection-moulded plastic material, has a body in the shape of a goblet, or elongated bowl, and is arranged slidably inside the first rigid member 10 through the opening 18.

The first end portion (ie. the upper one) of said second rigid member 20 has a central opening 21 defined by a downward facing annular edge 22, against which an end portion of the first spring 30 is caused to abut, as this will be described in greater detail further on.

In the first above cited embodiment (Figures 1 to 3), the second end portion 33 of said second rigid member 20 forms a seat in which the metal hinging pin 26 is retained for a second protruding steel hook 27 for anchoring the suspension means on to the washing assembly of the washing machine (as shown schematically with an eyelet N in Figures 2 and 3 for reasons of greater simplicity). The suspension plane of the hook 27 may be perpendicular to the suspension plane of the hook 17 (as this is shown in the cited Figures), but it may also be different (eg. it may be the same), should the shape or geometric configuration of the washing assembly require it. In this first embodiment of the present invention, the body of the second rigid member 20 is furthermore advantageously strengthened by means of at least a longitudinal rib 24 integrally moulded therewith.

In the second afore mentioned embodiment (Figure 4), the second end portion 23a (ie. the lower one) of the second rigid member 20 is provided by overmoulding with a second steel hook 27a for anchoring the suspension means on to the washing assembly of the washing machine (as shown schematically with an eyelet R in Figure 4 for reasons of greater simplicity). The suspension plane of the hook 27a may be the same as the suspension plane of the hook 17a (as this is shown in Figure 4), but it may also be different (eg. it may be perpendicular thereto), should the shape or geometric configuration of the washing assembly require it.

As this has already been pointed out above, the helical springs 30 and 40, which have a different rigidity and, preferably, also a different length, are mounted in series with respect to each other so as to be able to be retained jointly by the upper annular edge 22 of the second rigid member 20 and the opposite annular edge 19 of said second part 12 of the first rigid member 10. The springs 30 and 40 are furthermore so mounted as to ensure that a certain circumferential slack remains around the body of the second rigid member 20 inside the first rigid member 10. This kind of arrangement is such as to ensure that the springs 30 and 40 operate solely as compression springs, ie. in the most favourable conditions as far as reliability is concerned, as this is demostrated by a comparison of Figires 1, 2 and 3 with each other.

In the first above mentioned embodiment (Figures 1 to 3), the non-retained end portions of the springs 30 and 40 are resting on each other.

In the second above cited embodiment (Figure 4), between the springs 30 and 40 there is interposed an annular spacer 50. In the case that the need arises or is felt for the extent of the stresses imparted by the washing assembly on the afore mentioned friction shock-absorbers to be reduced, this enables the radially inner and/or outer surface of the spacer 50 to be mounted with a certain interference on the second rigid member 20 and the first part 11 of the first rigid member 10, respectively. In other words, the elastic suspension means according to the present invention contributes in this case to dissipating the kinetic energy generated by the washing assembly.

From the above description, it can be inferred that the elastic suspension means according to the present invention has, from a construction point of view, some advantages that are not offered by the afore discussed prior-art solutions. The first one among such advantages lies in the fact that the device can actually be assembled very easily. By holding the first part 11 of the first rigid member 10 in a position which is turned upside down with respect to the one shown in the Figures, the second rigid member 20 is first inserted thereinto from the top, followed by the two springs 30 and 40. The second part 12 of the first rigid member 10 is finally inserted by overcoming the reaction, or resistance, of the springs, up to the point in which the curcumferential protrusions 13 and 14 snap into engagement with each other. On the other hand, the possibility always exists for the same two parts 11 and 12 to be subsequently separated, with the use of an appropriate tool, by applying a temporary compression force on the springs 30 and 40 until said circumferential protrusions 13 and 14 are caused to disengage each other. A second advantage lies in the fact that pairs of springs 30 and 40 with widely varying rigidities and lengths can actually be mounted on a single pair of rigid members 10 and 20, so as to enable a complete range of elastic suspension means, ie. a range comprising all those suspension means that are actually needed to ensure the most adequate performance in connection with each type of washing assembly used in the various washing machine models, to be available at low costs and with a maximum in standardization effect at a manufacturing level.

For reasons of greater simplicity, the operation of the above illustrated suspension means is described below with reference only to the first cited embodiment of the present invention (Figures 1-3).

From the illustration in Figure 1 it can be noticed that, before the suspension means is mounted in a washing machine, the distance between the centers of the two hooks 17 and 27 is at its minimum (Lₘₘ) since the springs 30 and 40 occupy all of the distance available between their mutually opposing annular edges 19 and 22. Such a distance, however, is shorter than the sum of the natural lengths of the two springs, ie. before the means itself is assembled by securing the two parts 11 and 12 of the first rigid member 10 to each other.

When the suspension means is on the contrary mounted in a washing machine, so that its upper hook 17 is attached to the stationary structure M, while its lower hook 27 is attached to the tub N, ie. the washing assembly, and after the latter has been loaded with the clothes to be washed and the washing liquor, the springs 30 and 40 are subject to a remarkable compression stress, for instance in the order of magnitude of 35 kg. As a result, the distance between the centers of the two hooks 17 and 27 is at its maximum (L_{w}, see Figure 2) and, in addition to the hook 27, also a substantial length of the second rigid member 20 protrudes downwards from the first rigid member 10. The Applicant has found that the best operational results are obtained by so selecting a spring 40 as to make sure that, in these conditions, it is fully compressed (ie. "packed"), so that the suspension means is very rigid. As a result, the washing assembly remains substantially still, ie. does not move, with respect to the stationary structure of the washing machine, without any risk of bumps or shocks, during all of the phases of the washing process that are carried out at a low speed of the rotating drum (approx. 60 to 80 rpm).

When, according to the particular phase of the washing process, the washing machine then start to operate at a higher rotating speed of the drum (eg. 1500 rpm) to carry out a spin-extraction and water discharge phase, the springs 30 and 40 are subject to a smaller compression stress, eg. approx. 22 kg. As a result, the distance between the centers of the hooks 17 and 27 is correspondingly reduced (Lₛ<L_{w}, see Figure 3). Under these conditions, therefore, both springs operate in the range of elasticity, so that the suspension means ensures a very supple connection between the washing assembly and the stationary structure of the washing machine, with clear advantages in the case of unbalanced washloads in the drum, ie. in the washing assembly itself.

From an operative point of view, the suspension means according to the present invention has the advantage of not only making the washing assembly more or less rigid with respect to the stationary structure of the washing machine, depending on the various loading conditions of the washing assembly itself, but also of being practically self-adjusting.

While the description given above is limited to embodiments of the present invention that, at this moment, may be considered as preferred ones, it will be appreciated that the scope of the present invention extends to also cover any other embodiment that may be developed by those skilled in the art from the teachings thereof. In particular, other elastically deformable means can be used instead of the two afore described helical springs, such as for instance a single spring comprising at least two lengths of different rigidity, so that one of them is fully compressed when the washing machine is fully loaded and operating at a low rotating speed of its drum. The same applies to the two parts 11 and 12 of the first rigid member 10, which may be removably secured to each other with connection means differing from the snap-fitting ones 13 and 14 considered in the above description.

## Claims

1. Suspension means comprising a first and a second rigid member (10, 20) at least prevailingly made of plastics, each one of them having an end portion (15, 23; 15a, 23a) provided with attachment hooks (17, 27; 17a, 27a) for being in the same manner attached to either the stationary structure or the washing assembly of a rotating-drum washing machine, and comprising compression spring means (30, 40) which are adapted to vary the rigidity of the suspension of the washing assembly during the operation of the washing machine, said spring means (30, 40) being enclosed between the first one and the second one of said rigid members (10, 20) so as to ensure the mutual connection thereof, said first rigid member (10) essentially consisting of a casing with a first and a second part (11, 12) that are removably connected to each other, and further provided, at the second end portion thereof, with an opening (18) through which said second rigid member (20) is capable of sliding, having the end portions of said spring means (30, 40) retained between mutually opposing edges (19, 22) which are respectively provided on the second end portion of said first rigid member (10) and the first end portion of said second rigid member (20).

2. Suspension means according to claim 1, where the said compression spring means consist of a series of at least two springs (30, 40), wherein at least one (40) of said springs is adapted to be in a state of substantially full compression when the washing assembly is loaded with the clothes to be washed and the washing liquor due to the fact that it has a different length and/or rigidity than the other spring (30).

3. Suspension means according to claim 1 or 2, wherein said compression spring means (30, 40) consist of a single compression spring having at least two sections of a different length and/or rigidity.

## Patentansprüche

1. Aufhängevorrichtung, die ein erstes und ein zweites, starres Teil (10, 20) umfasst, die zumindest bevorzugt aus Kunststoff hergestellt sind und von denen jedes einen Endabschnitt (15, 23; 15a, 23a) aufweist, die mit Befestigungshaken (17, 27; 17a, 27a) versehen sind, damit sie in der gleichen Weise entweder an der ortsfesten Konstruktion oder an der Waschvorrichtung einer Drehtrommelwaschmaschine angebracht werden, und Druckfedermittel (30, 40) umfasst, die die Aufhängesteifigkeit der Waschvorrichtung während des Betriebs der Waschmaschine ändern können, wobei die Federmittel (30, 40) zwischen dem ersten und dem zweiten, starren Teil (10, 20) eingeschlossen sind, um eine gegenseitige Verbindung davon zu gewährleisten, wobei das erste, starre Teil (10) im Wesentlichen aus einem Gehäuse mit einem ersten und einem zweiten Teil (11, 12) besteht, die entfembar miteinander verbunden sind und ferner an dem zweiten Endabschnitt davon mit einer Öffnung (18) versehen ist, durch die das zweite, starre Teil (20) hindurchgleiten kann, wobei die Endabschnitte der Federmittel (30, 40) zwischen gegenseitig gegenüberstehenden Rändern (19, 22) gehalten sind, die jeweils an dem zweiten Endabschnitt des ersten, starren Teils (10) und dem ersten Endabschnitt des zweiten, starren Teils (20) vorgesehen sind.

2. Aufhängevorrichtung nach Anspruch 1, wobei die Druckfedermittel aus einer Reihe von zumindest zwei Federn (30, 40) bestehen, wobei zumindest eine (40) der Federn, wenn die Waschvorrichtung mit zu waschender Wäsche und Waschlauge beschickt ist, in einem Zustand im Wesentlichen des vollen Zusammendrückens aufgrund der Tatsache ist, dass sie eine unterschiedliche Länge und/ oder Steifigkeit als die der anderen Feder (30) aufweist.

3. Aufhängevorrichtung nach Anspruch 1 oder 2, wobei die Druckfedermittel (30, 40) aus einer einzelnen Druckfeder bestehen, die zumindest zwei Abschnitte unterschiedlicher Länge und/oder Steifigkeit aufweisen.

## Revendications

1. Moyens de suspension comprenant un premier et un deuxième élément rigides (10,20), réalisés au moins majoritairement en matière synthétique, chacun d'eux ayant une partie d'extrémité (15, 23 ; 15a, 23a) munie de crochets d'attachement (17, 27 ; 17a, 27a) devant être attachés de la même manière à la structure stationnaire ou à l'ensemble de lavage d'une machine de lavage à tambour rotatif, et comprenant des moyens formant ressort de compression (30, 40), adaptés pour modifier la rigidité de la suspension de l'ensemble de lavage durant le fonctionnement de la machine de lavage, les dits moyens formant ressort (30, 40) étant enclos entre le premier et le deuxième des dits éléments rigides (10, 20) de manière à assurer leur liaison mutuelle, ledit premier élément rigide (10) étant essentiellement constitué d'un boîtier ayant une première et une deuxième partie (11, 12), reliées de façon désolidarisable l'une à l'autre et en outre munies, à leur deuxième partie d'extrémité, d'une ouverture (18) à travers laquelle ledit deuxième élément rigide (20) est susceptible de coulisser, les parties d'extrémité desdits moyens formant ressort (30, 40) étant retenue entre des bords (19, 22) mutuellement opposés, prévus respectivement sur la deuxième partie d'extrémité dudit premier élément rigide (10) et la première partie d'extrémité dudit deuxième élément rigide (20).

2. Moyens de suspension selon la revendication 1, dans lesquels lesdits moyens formant ressort de compression sont constitués d'une série d'au moins deux ressorts (30,40), dans lesquels au moins l'un (40) desdits ressorts est adapté pour être en un état de compression pratiquement complète lorsque l'ensemble de lavage est chargé par les vêtements à laver et le liquide de lavage, du fait qu'il a une longueur différente et/ou une rigidité différente de l'autre ressort (30).

3. Moyens de suspension selon la revendication 1 ou 2, dans lequel lesdits moyens formant ressort de compression (30, 40) sont constitués d'un ressort de compression unique ayant au moins deux sections, de longueur et/ou de rigidité différentes.
